(19) 

**Europäisches Patentamt**
**European Patent Office**
**Office européen des brevets**

(11) **EP 3 909 669 A1**

(12) **EUROPEAN PATENT APPLICATION**

(43) Date of publication:
**17.11.2021 Bulletin 2021/46**

(21) Application number: **20174809.2**

(22) Date of filing: **14.05.2020**

(51) Int Cl.:
**B01D 71/02** (2006.01) **B01D 67/00** (2006.01)
**B01D 53/22** (2006.01) **B01D 69/12** (2006.01)
**B01D 71/68** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ecole Polytechnique Fédérale de Lausanne (EPFL)**
**1015 Lausanne (CH)**

(72) Inventors:
- **AGRAWAL, Kumar Varoon**
  **1800 VEVEY (CH)**
- **BABU, Deepu Joseph**
  **1950 SION (CH)**
- **VILLALOBOS, Luis Francisco**
  **1800 VEVEY (CH)**

(74) Representative: **reuteler & cie SA**
**Chemin de la Vuarpillière 29**
**1260 Nyon (CH)**

(54) **METHOD OF PREPARATION OF POROUS POLYMERIC SUPPORT LAYER AND USES THEREOF**

(57) The invention relates to methods for the preparation of polymer supported graphene membrane by non-solvent induced phase separation and resulting products thereof, in particular useful for the preparation of gas separation membranes, in particular for He or $H_2$ or $CO_2$ sieving from lager molecules.

**Description**

**Field of the Invention**

The present invention pertains generally to the field of porous polymers, in particular by non-solvent induced phase separation and resulting membranes thereof, notably in the context of support layers.

**Background of the Invention**

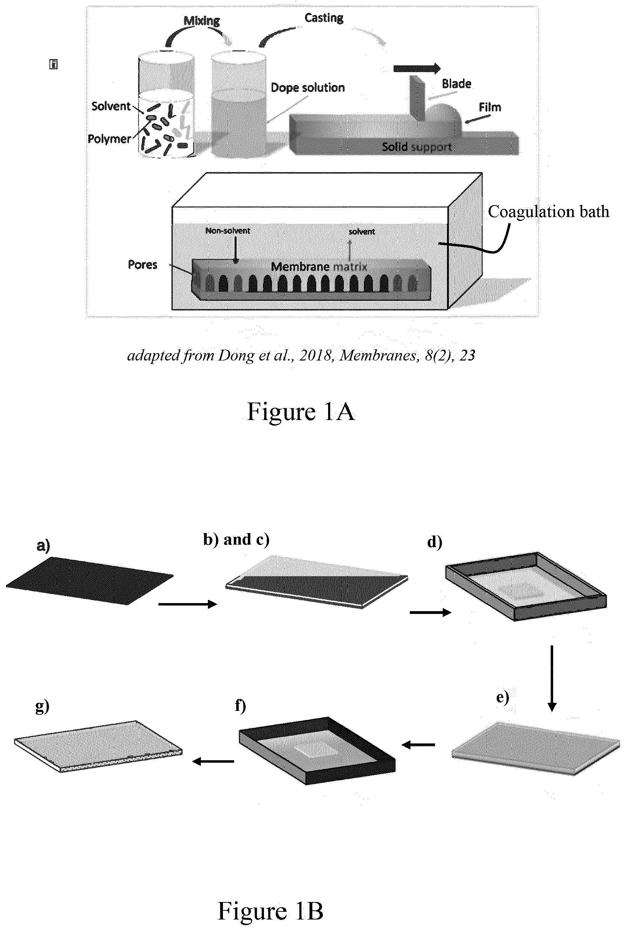

Single-layer graphene membranes are regarded as the ultimate membrane materials for separation applications not only because they are single atom thick but also because of their higher thermal and chemical stability and flexibility that is uncharacteristic for an inorganic material (Jiang et al., 2009, Nano Lett., 9 (12), 4019-4024; Koenig et al., 2012, Nat. Nanotechnol. 7 (11), 728-732; Celebi et al., 2014, Science, 344 (6181), 289-292). Large-scale roll-to-roll synthesis of graphene on copper foil via chemical vapor deposition has already been demonstrated a decade ago and its transfer onto non-porous substrates has been well-established (Bae et al., 2010, Nat. Nanotechnol., 5 (8), 574-578; Kobayashi et al., 2013, Appl. Phys. Lett., 102 (2), 023112). However, for membrane applications, the underlying substrate should be porous and the fabrication of graphene on a porous substrate is challenging (Wang et al., 2017, Nat. Nanotechnol., 12 (6), 509-522; Huang et al., 2018, Nat. Commun., 9 (1), 2632). This is because, free standing graphene frequently ruptures during the substrate etching and subsequent liquid drying stage. *Lee et al.* investigated the rupture mechanism of single layer graphene spanning pores of various diameters and concluded that the capillary force along with the triple junction force is responsible for the large deformation and subsequent rupture of a suspended film (Lee, Cet al., 2014, ACS Nano, 8 (3), 2336-2344). The deformation of graphene films can be minimized by developing suitable support structures with pores in nanometer regime. In addition to the pore size considerations, to exploit the full potential of graphene membranes, the support structure should be flexible, thermally and chemically robust and should be easy to scale-up (*Wang et al., 2017, supra*).
Non-solvent induced phase separation (NIPS) is a well-established technique for obtaining a porous polymer structure (Baker, R. W. Membrane Technology and Applications, Second edition.; Wiley, 2004). The NIPS reaction system uses a ternary composition, usually including a polymer, a solvent and a non-solvent. The NIPS process (immersion precipitation) starts by mixing at least a polymer and a solvent to form an initial homogeneous solution (dope solution). Then, the dope solution is cast as a thin film on a support or extruded through a die to generate the membrane shapes such as flat sheets or hollow fibers (Wang et al., 2013, Curr. Opin. Chem. Eng., 2, 229-237) as schematized on **Fig. 1A.** Subsequently, the material goes into a coagulation bath containing a non-solvent or a poor solvent for the polymer, and hence, phase separation takes place when the solvent exchanges into the non-solvent and precipitation occurs in the polymeric solution. Different morphologies of porous polymer associated to different types of demixing have been described (Guillen et al., 2011, Ind. Eng. Chem. Res, 50, 3798-3817). Although the theoretical models can predict the size and location of the liquid-liquid demixing gap for its influence on the pore structures, the situation is more complex as several interactions are involved between the morphology of polymer and the system parameters for the immersion precipitation process (Tan et al., 2019, Polymers, 11, 1160; doi:10.3390/polym11071160). The successful development of NIPS process was responsible for the large-scale development and commercialization of polymeric membranes, however, the obtained membrane is essentially a thin dense polymeric layer formed at the top surface of the casted film and no investigation regarding the controlling the morphology of polymer at the bottom surface of the film has been carried out.

Among thousands of different polymers, glassy polymers like polysulfone (Psf), polyethersulfone (PES) and polyimides (PI) are known to be better suited for NIPS process. PES, in particular, is interesting as a graphene support as it can retain its structural integrity at temperatures as high as 200°C on a continuous use basis (Ismail et al., 2015, Gas Separation Membranes: Polymeric and Inorganic; Springer International Publishing). *Qin et al.* reported the first use of PES as a support layer for graphene based nanofiltration membranes (Qin et al., 2017, ACS Appl. Mater. Interfaces, 9 (11), 9239-9244). The polymer solution which they used for casting had a composition of 10-20% PES in N-methyl-2-pyrrolidone (NMP) with isopropylalcohol (IPA) added as an additive. Water at room temperature was used as the non-solvent. *Kidambi et al.* also used a similar composition (10- 16 wt.% PES, 1-2 wt.% IPA and 70 - 82 wt.% NMP) with water at room temperature as the non-solvent for preparing the porous graphene support (Kidambi et al., 2018, ACS Appl. Mater. Interfaces, 10 (12), 10369-10378; Karnik et al., 2018, Adv. Mater. 2018, 30 (49), 1804977). In both the cases, however, asymmetric structures with *finger-like* macrovoids extending to the bottom section of the polymer film, typical for phase inversion of PES were observed (Barzin et al., 2018, J. Membr. Sci., 325 (1), 92-97). A very thin layer of net like structure, at the bottom of these macrovoids, supported the graphene film. The presence of the macrovoids is undesirable for a support as cracks are easily developed in the thin net structure. Further, the macrovoids collapse under pressurization during membrane operation. Even drying of the films becomes challenging as the resulting capillary force can collapse the entire structure (*Qin et al., 2017, supra*).

Therefore, the development of new methods of fabricating suitable porous support for graphene is highly attractive in view of the large-scale deployment of filter graphene membrane that has been hampered so far by the above described technical limitations.

**Summary of the Invention**

The present invention is based on the unexpected finding of a process that allows obtaining a supportive polymeric layer on a graphene layer with suitable mechanical properties for ensuring a robust support, while maintaining suitable gas sieving properties.

A general object of this invention is to provide an efficient method of preparation of a gas filter comprising a supported graphene membrane that can be easily handled without inducing cracks and defects.

One of the specific objects of this invention is to provide an efficient method of preparation of a supported graphene membrane having gas permeation characteristics similar to that expected from the intrinsic defects of single-layer graphene.

It is advantageous to provide a method of preparation of a polymeric layer on a graphene membrane by NIPS wherein the formation of macrovoids (finger-like large pores) in said polymeric layer is minimized or avoided.

It is advantageous to provide a method of preparation of a polymeric layer on a graphene membrane by NIPS wherein said polymeric layer has a net-like structure of interconnected pores.

It is advantageous to provide a method of preparation of a polymeric layer on a graphene membrane by NIPS wherein said polymeric layer has sub-500 nm pores at the polymer-graphene interface (lower layer of the polymer layer), preferably sub-300 nm.

It is advantageous to provide a method of preparation of a polymeric layer on a graphene membrane by NIPS wherein the upper layer of the polymer layer is porous.

It is advantageous to provide a method of preparation of a polymeric layer on a graphene membrane by NIPS wherein the polymer layer does not provide significant gas transport resistance to the overall gas transport.

It is advantageous to provide a method of preparation of a porous polymer as a mechanically-reinforcing support, wherein said polymer may be directly casted on an as-synthesized graphene membrane on a sacrificial support.

Another of the specific objects of this invention is to provide a method for the preparation of a gas selective filter comprising a graphene membrane, which is cost effective, has good gas selectivity and high performance and to provide a gas selective filter comprising a polymer-supported graphene membrane with good mechanical resistance.

It is advantageous to prepare a polymeric film essentially free of macrovoids, in particular by NIPS.

It is advantageous to prepare a polymeric film on a graphene layer, said polymeric film having net-like structure of interconnected pores.

It is advantageous to prepare a polymeric film on a graphene membrane, said polymeric layer has sub-500 nm pores at the polymer-graphene interface (lower layer of the polymer layer), preferably sub-300 nm.

It is advantageous to prepare a supported graphene membrane wherein the graphene membrane has less than 10 ppm of morphological damages on the area basis where such damages are essentially tears, cracks, curling, etc.

It is advantageous to provide a gas selective filter using a supported graphene membrane wherein the graphene membrane has less than 10 ppm of morphological damages on the area basis and useful for gas separation, in particular He or $H_2$ sieving (e.g. $H_2/CO_2$, $H_2/CH_4$, $H_2/N_2$ separation).

Objects of this invention have been achieved by providing a method for the preparation of a supported graphene membrane according to claim 1.

Objects of this invention have been achieved by providing a method for the preparation of a gas selective graphene membrane according to claim 1.

Objects of this invention have been achieved by providing a gas selective separation filter according to claim 14.

Objects of this invention have been achieved by providing a use of a gas selective filter according to claim 15.

Disclosed herein is a method for the preparation of a polymer-supported graphene membrane comprising the steps of:

**a)** providing a graphene membrane on a sacrificial support;
**b)** providing a solution of a polymer with a glass transition temperature of about 200°C or higher in an organic solvent ("dope" or "casting" solution), wherein the said solution comprises:

**i)** from about 5 to about 45 wt.% of said polymer,
**ii)** a dope additive selected from a polymeric agent such as polyvinylpyrrolidone (PVP), a polyethylene glycol (PEG), polyvinyl alcohol (PVA) and polyethylene oxide (PEO) and non-polymeric agent such as glycerol, propionic acid (PA), surfactants such as sorbitan monoleate (Span-80) wherein the amount of the dope additive is higher than 5 to about 65 wt.% and wherein the viscosity of the resulting dope solution at room temperature is from about 0.5 to about 12.75 Pa s, more specifically from about 0.8-3 Pa s at 298 K; and **iii)** optionally but preferably a further dope additive such as an alcohol or water wherein said further dope additive is at about 1 to about 4 wt% (e.g. 2%);

**c)** covering the graphene membrane on sacrificial support with the said polymer solution to form a regular polymer solution film on the top of the graphene membrane on a sacrificial support;

**d)** placing the polymer coated graphene membrane on sacrificial support in a coagulation bath comprising a non-solvent to induce a non-solvent induced phase separation at a temperature from about 0 to 60 °C, wherein said non-solvent comprises from about 55 to about 100 wt.% of an alcohol.

The obtained product in the form of a polymer-coated graphene membrane on sacrificial support is subjected to an etching step to remove the sacrificial support to obtain a free-standing polymer-coated graphene membrane.

In an advantageous embodiment, the free-standing polymer-coated graphene membrane is used for preparing a gas filter.

Also disclosed herein is a gas selective filter wherein the graphene membrane is made with a method according to the invention.

Also disclosed herein is gas selective filter selecting $H_2$ and/or He from $CO_2$ or $N_2$ and from larger molecular weight hydrocarbons (e.g. $C_2H_4$) comprising an assembly of graphene membranes according to the invention.

Also disclosed herein is a use of a gas selective filter comprising a membrane for gas separation, in particular for separating $H_2$ and/or He and/or $CO_2$ from $N_2$ and $CH_4$ or from larger molecular weight hydrocarbons (e.g. $C_2H_4$).

In an advantageous embodiment, the $H_2$ permeance of the gas filter is from about $1 \times 10^{-8}$ to about $7.3 \times 10^{-7}$ mol m$^{-2}$ s$^{-1}$ Pa$^{-1}$ (e.g. $10^{-7}$ at 200 °C).

In an advantageous embodiment, the $H_2/N_2$ selectivity of a gas filter according to the invention is up to 28.7.

Other features and advantages of the invention will be apparent from the claims, detailed description, and figures.

**Brief Description of the drawings**

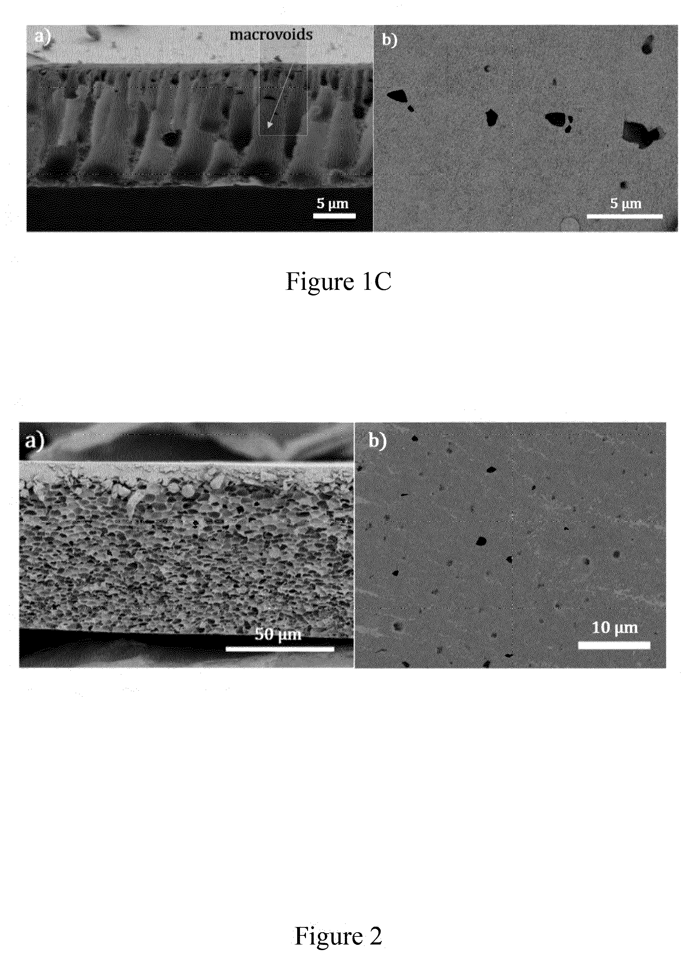

**Figure 1** describes the main steps of a standard NIPS process as described in Dong et al., 2018, Membranes, 8(2), 23 to obtain a polymer membrane on a solid support **(A)** and once applied on to the surface of a graphene membrane **(B)** and the SEM images of the structure of such a polymer obtained by said standard NIPS process **(C): a)** typical asymmetric structure showing the macrovoids; **b)** Large pores formed on the bottom surface where graphene is in contact, as described in comparative Example 1.

**Figure 2** provides SEM images of the structure of a polymer obtained by a NIPS process as described in Example 1, where different PES compositions (10-24 wt%) in NMP were used as dope solutions with IPA (2%) and where water as the non-solvent was replaced with IPA as described in comparative Example 1. **a)** Cross-sectional SEM image of the spongy layer obtained by carrying out phase inversion in coagulation batch comprising 100 % IPA as non-solvent with a dope composition comprising 16 wt.% PES and 2% IPA in NMP. **b)** Non-uniform pores formed on the bottom surface where graphene is in contact.

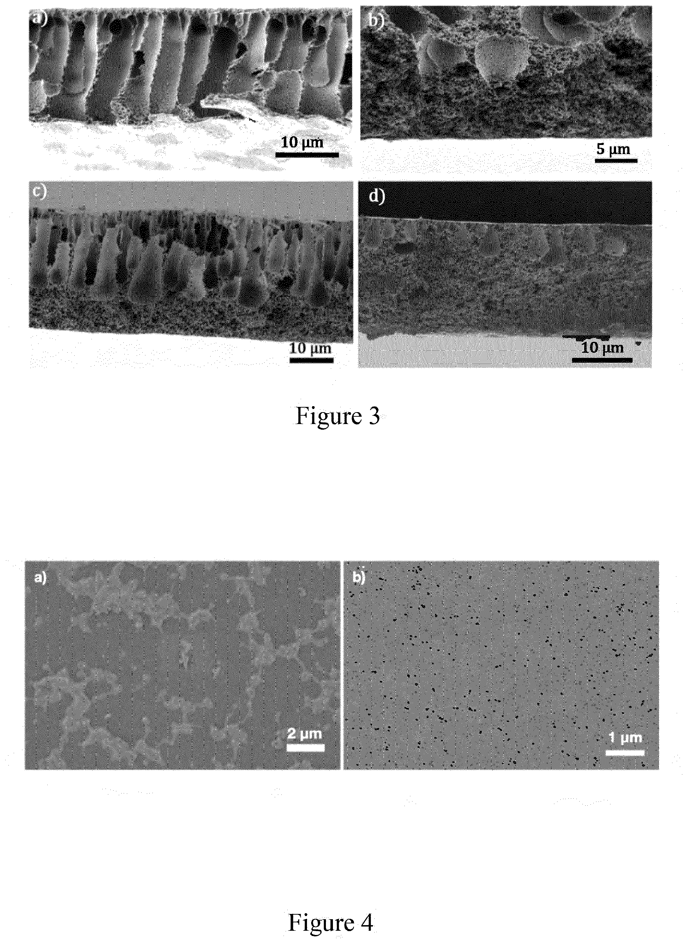

**Figure 3** illustrates the effect of different coagulant baths on the morphology of the film for a dope composition comprising PES at 16 wt.%, a dope additive (e.g. PVP at 10 wt.%) and a further dope additive (e.g. IPA at 2 wt%) in NMP in: **a)** water 100% at R.T.; **b)** water 100% at 0°C; **c)** IPA 100% at R.T.; **d)** IPA at 0°C as shown on SEM images as described in Example 2.

**Figure 4** illustrates effect of the addition of a dope additive according to the invention (e.g. PVP at 10 wt.%) in the dope solution comprising PES at 16 wt.%, 2 wt.% IPA, in NMP on the porosity of the skin layer of the polymer coating resulting from a non-solvent induced phase separation; **a)** no PVP; **b)** 10 wt.% PVP as shown on SEM images as described in Example 2.

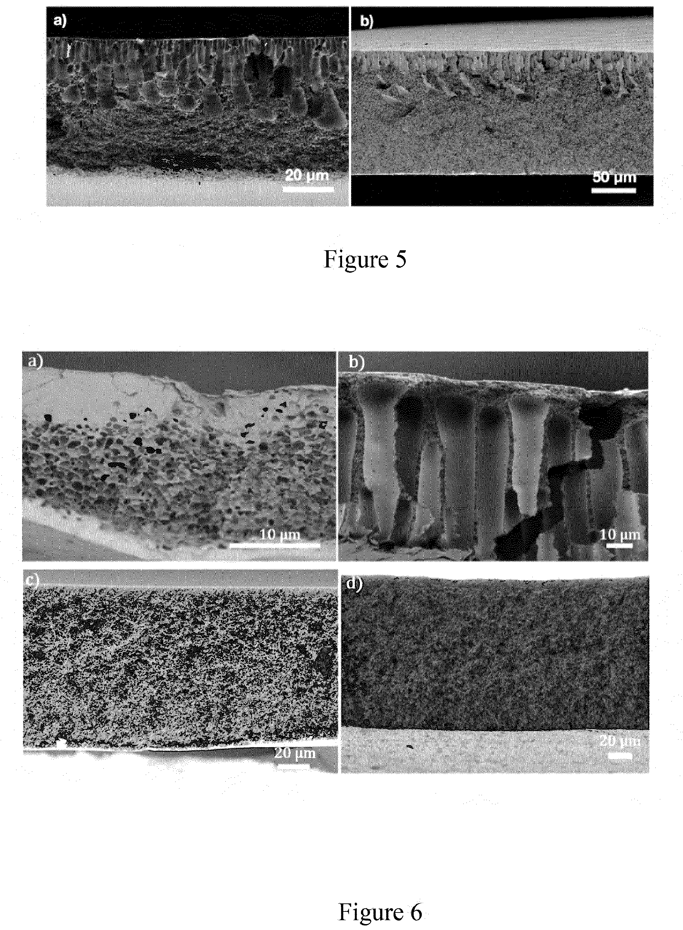

**Figure 5** presents a cross-sectional SEM image of the porous PES film having different thickness. The polymer solution (dope solution) was cast on the surface of the copper foil-supported graphene membrane with a wet-thickness of **a)** ~ 254 $\mu$m (10 MIL casting blade) and **b)** ~ 400 $\mu$m (10 MIL casting blade + 2 Kapton tapes).

**Figure 6** presents SEM image of the porous PES structure obtained after non-solvent induced phase separation by replacing PVP (MW 8'000 g/mole) at 10 wt.% a) with PEG (MW 2'000 g/mole) at 10 wt.% as dope additive in the dope solution; **b)** with 25 wt.% PVP (M.W. 8'000 g/mole); **c)** with 10 wt. % PVP (M.W. 360'000 g/mole) and using IPA at R.T. as non-solvent in the coagulation bath; **d)** with 10 wt. % PVP (M.W. 360000 g/mole) using water at R.T. as non-solvent in the coagulation bath, as described in Example 3.

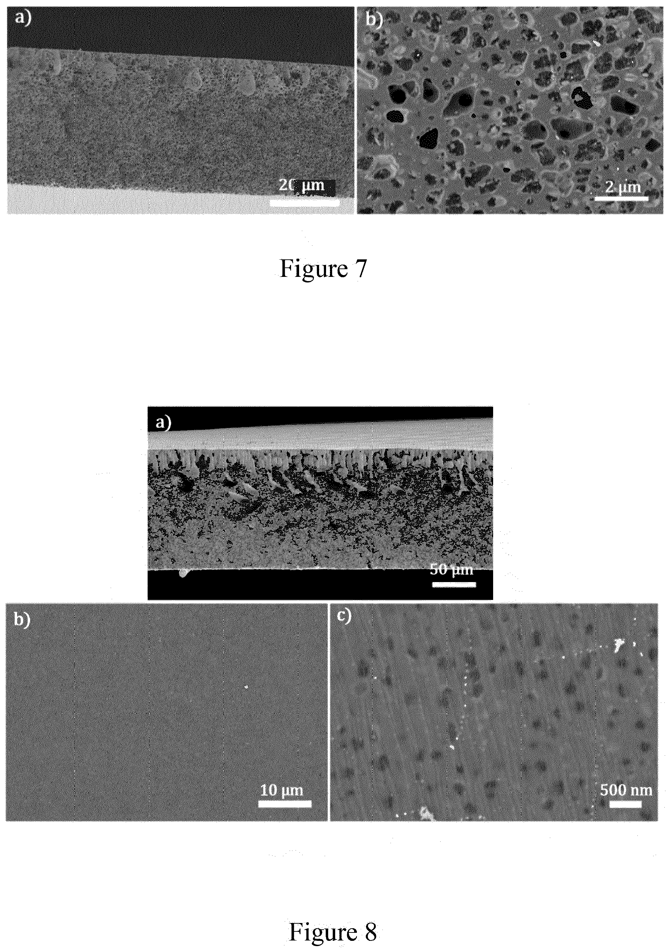

**Figure 7** presents SEM image of porous PES structure obtained after non-solvent induced phase separation ("phase inversion") of a dope solution comprising 5 wt.% PVP. **a)** cross-sectional SEM image; **b)** PES surface underneath the graphene. Suspended graphene can be seen only across the smaller pores.

**Figure 8** presents SEM image of PES structure obtained by a process of the invention as described in Example 2. **a)** cross-sectional view; **b)** low magnification image of the PES underneath the graphene surface showing excellent uniformity; **c)** high magnification image confirming the sub-300 nm pores underneath the graphene surface.

## Detailed description of embodiments of the invention

The expression "non-solvent induced phase separation" (NIPS) refers to a process as described in Dong et al., 2018, Membranes, 8(2), 23 and as illustrated under **Fig. 1A** wherein a dope solution is obtained by mixing at least one polymer and a solvent to form an initial homogeneous solution. Then, the dope solution is cast as a thin film on a support (e.g. with a moving blade) or extruded through a die to generate the membrane shape on a solid support. Subsequently, the coated solid support goes into a coagulation bath containing a non-solvent or a poor solvent for the polymer, and therefore a phase separation takes place when the solvent exchanges into the non-solvent and precipitation occurs in the polymeric solution.

Referring to the figures, in particular first to **Fig. 1B,** is provided an illustration of a method for the preparation of a polymer-supported graphene membrane according to an embodiment of the invention. The illustrated method generally comprises the steps of:

comprising the steps of:

a) providing a graphene membrane on a sacrificial support;

b) providing a solution of a polymer with a glass transition temperature of about 200°C or higher in an organic solvent ("dope" or "casting" solution), wherein the said solution comprises:

i) from about 5 to about 45 wt.% of said polymer,

ii) a dope additive selected from a polymeric agent such as polyvinylpyrrolidone (PVP), a polyethylene glycol (PEG), polyvinyl alcohol (PVA) and polyethylene oxide (PEO) and non-polymeric agent such as glycerol, propionic acid (PA), surfactants such as sorbitan monoleate (Span-80) wherein the amount of the dope additive is higher than 5 to about 65 wt.% and wherein the viscosity of the resulting dope solution at room temperature is from about 0.5 to about 12.75 Pa s, more specifically from about 0.8-3 Pa s at 298 K;

c) covering the graphene membrane on sacrificial support with the said polymer solution to form a regular polymer solution film on the top of the graphene membrane on a sacrificial support;

d) placing the polymer coated graphene membrane on sacrificial support in a coagulation bath comprising a non-solvent to induce a non-solvent induced phase separation at a temperature from about 0 to 60 °C, wherein said non-solvent comprises from about 55 to about 100 wt.% of an alcohol;

e) collecting the resulting polymer-coated graphene membrane on sacrificial support from the coagulation bath.

According to a particular aspect, the dope solution may further comprise a further dope additive such as an alcohol or water wherein said further dope additive is at about 1 to about 4 wt% (e.g. 2%).

According to a particular aspect, the resulting polymer-coated graphene membrane may then be subjected to an etching step in an etching batch to remove the sacrificial support **(step f)** to obtain a free-standing polymer-coated graphene membrane **(step g).**

The sacrificial support may be a copper foil or a Nickel foil.

According to a particular aspect, the etching batch comprises a sodium persulfate solution and the etching **step f)** is followed by washing in deionized water.

According to a particular aspect, the graphene membrane on a sacrificial support can be provided in the form of a single layer graphene on a copper foil, for example obtained by known chemical vapor deposition.

The polymer with a glass transition temperature of about 200°C or higher may be polyethersulfone (PES) or polysulfone (PSf).

According to an advantageous embodiment, the polymer is PES.

The dope or casting solution may comprise a polymer with a glass transition temperature of about 200°C or higher at a concentration of about 8 to about 25 wt %.

The dope or casting solution may comprise a polymer with a glass transition temperature of about 200°C or higher at a concentration of about 15 to about 25 wt%.

The organic solvent used in the dope solution is a solvent of the polymer. For example, the organic solvent may be selected from N-Methyl-2-pyrrolidone (NMP), Dimethylformamide (DMF), Dimethyl sulfoxide (DMSO) and $\gamma$-Butyrolactone.

According to an advantageous embodiment, the polymer is PES and the organic solvent is NMP.

According to an advantageous embodiment, the dope additive is selected from a polyvinylpyrrolidone (PVP) and a polyethylene glycol (PEG).

In an advantageous embodiment, the dope additive is PVP.

In another advantageous embodiment, the dope additive is PEG.

In an advantageous embodiment, the dope additive is PEG and the dope solution comprises the dope additive at a concentration higher than 5 wt % up to about 65 wt%.

In an advantageous embodiment, the dope solution comprises the dope additive selected from a polymeric agent such as polyvinylpyrrolidone (PVP), a polyethylene glycol (PEG), polyvinyl alcohol (PVA) and polyethylene oxide (PEO) and non-polymeric agent such as glycerol, propionic acid (PA), surfactants such as sorbitan monoleate (Span-80) at a concentration higher than 5 wt % up to about 15 wt%.

According to an advantageous embodiment, the molecular weight or the dope additive is from about 400 to about 400'000 g/mole, in particular from about 400 to about 8'500 g/mol, such as from about from 800 to about 8'500 g/mol, for example from about 1'000 g/mol to about 2'500 g/mol or from about 1'000 g/mol to about 8'500 g/mol, in particular from about 1'500 g/mol to about 8'000 g/mol. (e.g. 2'000 g/mol).

In an advantageous embodiment, the dope additive is PVP and the dope solution comprises the dope additive at a concentration higher than 5 wt % up to about 15 wt%.

According to an advantageous embodiment, the dope solution is coated on the graphene membrane at a temperature between about 20 and 30 °C.

According to an advantageous embodiment, the graphene membrane on sacrificial support is covered with the said polymer solution to form a regular polymer solution film on the top of the graphene membrane, said formed film having a thickness in the range 10 to 1'000 μm, typically from about 100-500 μm.

According to another advantageous embodiment, the regular polymer solution film on the top of the graphene membrane may be formed by the removing the excess dope solution (e.g. using a casting blade).

According to an advantageous embodiment, the polymer coated graphene membrane is placed on sacrificial support in a coagulation bath comprising a non-solvent to induce a non-solvent induced phase separation for about 1 hour.

According to an advantageous embodiment, the dope additive is readily soluble in the non-solvent. This property is useful in obtaining a sufficient porosity in the polymer layer, especially in the skin layer (the very top layer of the polymer film).

Without willing being bound by any theory, it has been found that agents which increase the viscosity of the dope solution advantageously slow down the mass transfer of nonsolvent (from the coagulation bath) inside the polymer film for phase separation, and help in reducing pore coarsening leading to smaller pores in creating a kinetic hinderance. At the same time, agents which increase the viscosity of the dope solution increase the thermodynamic instability of the system by moving it closer towards the binodal boundary of the phase diagram (thermodynamic enhancement) leading to higher porosity. The final porous morphology of the film is a function of trade-off between the kinetic hinderance and the thermodynamic enhancement. Therefore, the presence of a dope additive proved to be critical for obtaining the combination of spongy structures and small pores on the polymer layer in the area of the polymer-graphene interface. This is important because the skin layer should be porous and not too dense otherwise the gas permeance will reduce and may be dominated by the skin layer.

In another further advantageous embodiment, the dope additive is PVP having a MW of about from about 1'000 to about 8'500 g/mole (e.g. 8'000 g/mole).

In another further advantageous embodiment, the dope additive is PEG having a MW of about from about 1'000 g/mol to about 2'500 g/mole. (e.g. 2'000 g/mol).

In an advantageous embodiment, the dope solution comprises PES and PVP in NMP.

In a further advantageous embodiment, the dope solution comprises PES (e.g. from about 8 to about 25, for example, 16 wt.%) and PVP (e.g. from about 5 to about 15, for example, 10 wt.%) in NMP

In an advantageous embodiment, the dope solution further comprises at least one further additive, wherein said further additive is an alcohol, preferably isopropyl alcohol (IPA) or ethanol at about 1 to about 4 wt% (e.g. 2%).

In one further advantageous embodiment, the dope solution may comprise IPA at about 1 to about 4 wt % as further additive.

In an advantageous embodiment, the dope solution further comprises at least one further additive typically at about 1 to about 3 wt%.

According to an advantageous embodiment, the coagulation bath is at a temperature between about 20 and 30 °C.

The coagulation bath may comprise IPA at about 55 to about 100 wt.%.

According to an advantageous embodiment, the coagulation bath is 100% IPA.

The coagulation bath comprising the non-solvent may further comprise at least one further agent as a non-solvent additive such as alcohols such as ethanol, methanol.

In a particular aspect, the free-standing polymer-coated graphene membrane obtained after the etching **step**

**f)** is sealed (e.g. with an epoxy glue) on a metallic support on the side of the polymer layer, the graphene layer being on the other side to form a gas filter according to the invention.

According to a further particular aspect, the metallic support comprises a metallic mesh in contact with the polymer layer, wherein said metallic mesh is placed against a solid metal piece. The metallic mesh acts as a physical reinforcement aiding the pressurization of the membrane of the gas filter.

According to another particular embodiment, is provided a gas selective filter comprising a graphene membrane and a porous polymeric support structure wherein said polymeric support is composed of a polymer with a glass transition temperature of about 200°C or higher and wherein the size of the pores of the polymeric support are sub-500 nm, preferably sub-300 nm at the polymer-graphene interface.

According to another particular embodiment, a gas selective filter of the invention has a thickness of about 20-150 $\mu$m and comprises a graphene membrane and a porous polymeric support structure mechanically reinforcing the graphene membrane.

According to a further particular embodiment, the polymeric structure comprises interconnected pores.

According to a further particular embodiment, the polymeric structure has a porosity greater than 10%.

According to a particular embodiment, the $H_2$ permeance of the polymer-supported graphene membrane of the invention is from about $1 \times 10^{-8}$ mol m$^{-2}$ s$^{-1}$ Pa$^{-1}$ to about $7.3 \times 10^{-1}$ mol m$^{-2}$ s$^{-1}$ Pa$^{-1}$ (e.g. $10^{-7}$ at 200 °C).

According to another particular aspect, a method and of the invention further advantageously provides useful starting materials for the preparation of membranes suitable for He and $H_2$ from larger molecules with a high efficiency at high temperature where a $H_2$ permeance reaching 303 gas permeation units with $H_2/CO_2$, $H_2/N_2$, and $H_2/CH_4$ selectivities reaching 6.7, 28.7, and 22.1, respectively, at 150-200 °C.

In comparison, the state-of-the-art membranes for hydrogen sieving at high temperature are based on rigid polymers such as polybenzimidazole (PBI) (Swihart et al., 2017, Energy Environ. Sci. 00, 1-3; Pesiri et al., 2003, J. Memb. Sci. 218, 11-18), zeolites (Choi et al., 2010, J. Am. Chem. Soc. 132, 448-449; Ramasubramanian et al., 2013, AIChE J. 59, 1033-1045, Wang et al., 2014, J. Memb. Sci. 450, 425-432); amorphous silica (Kanezashi et al., 2010, in Advances in Bioceramics and Porous Ceramics II (John Wiley & Sons, Ltd, https://ceramics.onlinelibrary.wiley.com/doi/abs/10.1002/9780470584354.ch21), 229-239 ; Brinker et al., 1994, MRS Proc. 368, 329) and dense Pd films.(31-33). PBI membranes yield low $H_2$ permeance while the Pd-based membrane suffer from stability issue in the presence of contaminants ($H_2S$, CO, hydrocarbons). The silica and zeolite-based membranes show attractive performance for $H_2$ sieving, however, they involve a complex synthesis and activation process (Gascon et al., 2012, Chem. Mater. 24, 2829-2844).

According to a particular aspect, the dope additive according to the invention allows the formation of pores in the skin layer since it dissolves readily in the non-solvent.

According to another particular aspect, the dope additive according to the invention increases the viscosity of the polymer solution which helps in hampering or reducing the formation of macrovoids.

According to a particular aspect, the use of a further dope additive such as alcohols (e.g. IPA) or water allows to increase the thermodynamic instability of the dope solution and accelerate the phase inversion process.

According to another particularly advantageous embodiment, a further dope additive is used in the dope solution at a weight ratio between the polymer and said further dope additive from about 24:1 to about 6:1 (e.g. about 8:1).

The invention having been described, the following examples are presented by way of illustration, and not limitation.

**EXAMPLES**

**Example 1: Comparative methods of preparation of a porous PES layer (not from the invention)**

Asymmetric structures with finger-like macrovoids, typical for phase inversion of PES were observed when using a method as described in *Quin et al., 2017, supra or Kidambi et al., 2018, supra* as shown under **Fig. 1C** where a very thin layer of net like structure, at the bottom of macrovoids, supported the graphene film. The presence of the macrovoids is undesirable for a material for use as a support, in particular for graphene membranes as it collapses under pressurization and affects the reproducibility of the net like structure, often leading to formation of large micrometer sized openings.

Different PES compositions (10-24 wt. %) in NMP were used as dope solutions comprising IPA (2%) as dope additive and where water as the non-solvent was replaced with IPA in order to try to get rid of the macrovoids (PES to IPA weight ratio was about 8:1). In all cases, a spongy structure was obtained as shown in **Fig. 2.** However, pores at the interface with the graphene layer were found to be non-uniform with some pores even exceeding one micrometer which is not suitable for constituting a proposer supporting support for graphene.

The effect of the nature of the non-solvent was tested using a polymer solution containing PES (16 wt%) and IPA at 2 wt% prepared in NMP as a dope solution at room temperature. A graphene membrane on the copper foil was covered with the said polymer solution (dope solution or also called casting solution) to form a regular polymer solution film on the top of the graphene membrane on the copper foil and removing the excess solution using a casting blade. The polymer solution was degassed *in vacuum* at room temperature to remove the bubbles in the casting solution. The typical wet-thickness used for the casting process was in the range 10 to 1'000 $\mu$m, typically from about 100-500 $\mu$m, for example 400 $\mu$m (e.g. realized using casting blades of different air gaps and/or Kapton tapes as pathways for the casting blade).

Then, the polymer coated graphene membrane on the copper foil was placed in a coagulation bath comprising a non-solvent to induce a non-solvent induced phase separation at room temperature for at least 1 hour. Finally, the resulting polymer-coated graphene membrane on the copper foil was collected from the coagulation bath. The obtained membrane was then dried under ambient conditions to remove the nonsolvent from the polymer layer. The sacrificial layer (e.g. copper foil) was etched away in sodium persulfate solution and the resulting free-standing polymer/graphene film was used for further characterization.

Experiments, where the non-solvent of the coagulant bath was water at room temperature (R.T.), in others where the non-solvent was water at 0°C and in others where the non-solvent was 100 % of IPA at room temperature or near 0-5°C **(Fig. 3)** were compared for a same dope solution comprising 16 wt% PES, 2% wt. % IPA and 10 wt% PVP in NMP. When water at room temperature (R.T.) was used as the non-solvent, no change in morphology was observed **(Fig. 3a)**. However, when the phase inversion was carried out in water at 0-5°C as the non-solvent, the macrovoids did not extend all the way to the bottom but spongy structures extending few micrometers were observed near the graphene layer **(Fig. 3b)**. Replacing water with 100% isopropylalcohol (IPA) as the non-solvent resulted in spongy structure formation even at room temperature **(Fig. 3c)**. A completely spongy structure, with almost a complete absence of macrovoids was observed when IPA at 0-5°C was used as the non-solvent **(Fig 3d)**. When the process was carried out with a 1:1 vol.% mixture of water and IPA as the non-solvent ("coagulant"), the structure obtained was intermediate between using only water or IPA as the non-solvent (at room temperature for example, macrovoids did not extend all the way till the polymer-graphene interface as in the case of pure water as non-solvent and the spongy structure height was not as much as that of pure IPA as non-solvent at RT).

**Example 2: Method of preparation of a porous PES layer for supporting a graphene membrane according to the invention using a dope additive**

A single layer graphene was prepared on copper foil using standard vapor deposition method (Zhao et al., 2019, Science Advances, 5 (1), eaav1851*; Huang et al., 2018, Nature Communications 2018, 9 (1), 2632)*.
The following process was used to prepare a porous polymer as support of the graphene layer on the copper foil as described below:

   **a)** the graphene membrane on a copper foil was provided;
   **b)** a polymer solution containing PES (16 wt%), PVP (10 wt%) and IPA (2 wt%) was prepared in NMP as a dope at room temperature;
   **c)** the graphene membrane on the copper foil is then covered with the said polymer solution to form a regular polymer solution film on the top of the graphene membrane on the copper foil and the excess solution is removed using a casting blade;
   **d)** the polymer-coated graphene membrane on the copper foil is then placed in a coagulation bath comprising a non-solvent to induce a non-solvent induced phase separation at room temperature for at least 1 hour wherein said non-solvent comprises 55-100 wt% of IPA;

The resulting polymer-coated graphene membrane on sacrificial support is then collected from the coagulation bath.
The addition of PVP in the dope solution increases the porosity of the skin layer (top surface) thereby decreasing the resistance to the gas flow **(Fig. 4b compared to Fig. 4a)**) and the macrovoids were restricted to the top few micrometers of the polymer layer **(Fig. 5a)**. Increasing the thickness of the casting layer by using a casting blade with a larger air gap (e.g. 250 $\mu$m instead of 150 $\mu$m) did not lead to an increase in the depth of the macrovoids, the macrovoids being still restricted to the top few micrometers while the remaining thickness has the desirable spongy like structure **(Fig. 5b)**. Therefore, irrespective of the thickness, the macrovoids were restricted to the top few micrometers of the polymer layer. SEM images clearly show that the pores have a spongy-interconnected morphology **(Fig. 5b)**.
Using polyethylene glycol (PEG) (e.g. 10 wt.% with a MW of 2'000 g/mole) instead of PVP as dope solution additive also leads to a similar spongy structure **(Fig. 6a)** which confirms the assumption that the spongy structure can be obtained with IPA as the non-solvent for a polymer dope solution with a dope additive according to the invention. However, the quantity of dope solution additive should be carefully controlled since it can influence the viscosity of the dope solution beyond desirable values: for example the use of 25 wt. % PVP of MW 8'000 g/mol led to the presence of large macrovoids **(Fig. 6b)**. Using a high molecular weight of PVP (MW 360'000 g/mole) instead PVP of a MW of 8'000 g/mole in the dope solution in presence of 2% of IPA leads to a completely spongy structure with no macrovoids at room temperature **(Fig. 6c,d).** Therefore, the quantity of the dope additive should be adapted for achieving a desired viscosity of the dope solution from about to about 0.5 to about 12.75 Pa s, more specifically from about 0.8-3 Pa s at 298 K. A dope solution comprising a PES concentration of 24 wt%, 3 wt% IPA (PES:IPA=8:1) and 10 wt% PVP in NMP also leads to a desired spongy structure, albeit with a slightly larger pore size distribution of pores at the polymer-graphene interface.

Further, it is important to ensure that the pores underneath the graphene surface are preferably below 300 nm to ensure that the graphene film does not rupture during the drying stage. Also, the transmembrane pressure the graphene layer can withstand is inversely proportional to the diameter of the pores across which the graphene is suspended. Decreasing the PVP concentration from 10 wt.% to 5 wt.% significantly reduced the viscosity of the polymer solution accelerating the demixing kinetics. At 5 wt.% of PVP, the spongy morphology was still retained but the pores at the polymer-graphene interface were found to be much larger (0.2-1.7 $\mu$m) and non-uniform **(Fig. 7).** Even micrometer sized pores were found on the underlying layer and SEM images clearly show the rupture of graphene across these large pores while the smaller pores are still covered by graphene. In a similar fashion, increasing the IPA concentration in the dope solution (from higher than 4 wt.% to 10 wt.%) was also found to enlarge the pores and lead to more non-uniformity. The size of the pores at the polymer-graphene interface is dependent on the phase inversion kinetics. The phase inversion kinetics can be increased by using IPA at R.T. as the non-solvent instead of IPA at 0°C to obtain smaller pores near the graphene surface.

Experiments carried out with a dope solution comprising 16 wt % PES, 2 wt.% IPA, 10 wt. % PVP in NMP with a casting layer thickness of 400 $\mu$m (10 MIL + 2 kapton tape thickness) and immersion in a coagulation bath of pure IPA at R.T. for one hour lead to a reproducible structure with a sponge like morphology with macrovoids restricted to the top few micrometers and the pores at the polymer-graphene interface were all below 300 nm **(Fig. 8).**

In fact, it has been observed that the macrovoids remain in the upper layers of the polymer and do not migrate towards the polymer-graphene interface even when the thickness of the layer of the casted solution increases. For example, **Fig. 3c** and **8a** represent identical phase inversion conditions according to the invention except for **Fig. 8a** the thickness is higher, in this case, the macrovoids are limited to a small fraction of the total structure. This is further confirmed in **Fig.** 5 where films prepared under identical conditions (16 wt% PES, 2 wt% IPA, 10 wt% PVP in NMP using IPA at room temperature as the coagulant) with different thicknesses (52 $\mu$m **(Fig. 9a)** and 137 $\mu$m **(Fig. 9b)**), the macrovoids are still restricted to about 25 $\mu$m (25 $\mu$m **(Fig. 9a)** and 24 $\mu$m **(Fig. 9b)**) in spite of the increased casting thickness.

## Example 3: Characterization of a gas filter comprising a polymer-supported graphene membrane according to the invention

After etching the copper foil in sodium persulfate solution followed by washing in deionized water, the PES/Graphene film was sealed on to a metal disc using epoxy. If desirable, the etching of the copper foil can also be done after sealing the copper/Graphene/PES membrane assembly with epoxy. A metal mesh was placed in between the PES layer and the metal disc, which acted as a physical reinforcement aiding the pressurization of the membrane. When specified, 2 wt. % Polydimethylsiloxane (PDMS) in cyclohexane was applied by spin coating at 1'500 rpm for 60 s. The spin coated layers were dried by keeping the membrane assembly at 75°C for 6 hours before testing.

The membranes were tested using a custom made Wicke-Kallenbach type setup. Pre-calibrated mass flow controllers (MFC) were used for delivering gases to the feed side. Ar gas was used as the sweep gas and the flow was maintained at 30 sccm using a dedicated MFC. The pressure in the feed side was controlled using a back-pressure regulator and the permeate side was maintained at atmospheric pressure. Gas tight seals were ensured using Viton O-rings. The permeate side composition was analyzed using a calibrated mass spectrometer (Hiden Analytical HPR-20). For high temperature measurements, the feed and the sweep lines were pre-heated and the entire module was placed in an oven. The permeance $J_i$ of the gas $i$ was calculated according to equation (1)

$$J_i = \frac{X_i}{A \, \Delta P_i} \tag{1}$$

where $X_i$ is the flow rate of gas $i$, $A$ the membrane area, and $\Delta P_i$ is the transmembrane pressure difference for the species $i$. The selectivity of two gases ($\alpha_{ij}$ where $i$ is the faster permeating species) was calculated according to Equation (S2)

$$\alpha_{ij} = \frac{(C_i/C_j)_{permeate}}{(C_i/C_j)/_{feed}} \tag{2}$$

where $C_i$ is the concentration of gas species $i$ in a given stream.

In the gas permeation measurements, the addition of PVP (with 2% IPA) in the dope solution led to an increase in $H_2$ permeance from $10^{-7}$ to $>10^{-5}$ mol.m$^{-2}$s$^{-1}$Pa$^{-1}$ for the bare PES support. The interconnectedness and therefore the resulting porosity are confirmed by the gas permeation measurements which shows that the permeance of the polymer support obtained according to a method of the invention is of the order of $10^{-5}$ mol m$^{-2}$ s$^{-2}$ Pa$^{-1}$.

Gas permeation measurements of the as-synthesized graphene membrane on copper foil, hosting only intrinsic vacancy-defects as nanopores, supported on a porous PES membrane obtained by a method according to the invention revealed gas permeation characteristics similar to that expected from the intrinsic defects of single layer graphene layer confirming the successful crack-free transfer of graphene (Table 1 below).

**Table 1**

| | Gas permeance (mol/m$^2$-s-Pa) | | | Selectivity | |
|---|---|---|---|---|---|
| | $H_2$ | $CH_4$ | $CO_2$ | $H_2/CH_4$ | $H_2/CO_2$ |
| 25 °C ($\Delta$P = 0) | $4.3 \times 10^{-8}$ | - | - | - | - |
| 25 °C ($\Delta$P = 1 bar) | $8.9 \times 10^{-8}$ | $2.7 \times 10^{-8}$ | $1.9 \times 10^{-8}$ | 3.3 | 4.6 |

Another advantage of the method of the invention is that post-synthesis modification of graphene like plasma etching (He et al., 2019, Energy Environ. Sci., 12 (11), 3305-3312) can be easily carried out directly on the supported graphene membrane because graphene is at the top-most surface. Pristine graphene on PES layer obtained according to a method of the invention as described under Example 2 was subjected to 3 s rf plasma at a pressure of 70 mTorr. No damage to the PES film was observed in SEM.

Permeation measurements as described above revealed almost 3-fold increase in permeance after the plasma treatment (Table 2). For those experiments, a thin layer of polydimethylsiloxane (PDMS) was applied as a defect-sealing-layer since the PDMS solution effectively blocks the large defects of graphene if present, upon curing (Li et al., 2014, Chem. Commun., 50 (24), 3214-3216; Chiu et al., 2011, J. Membr. Sci., 377 (1); 182-190; Basu et al., 2010, Membr. Sci., 362 (1), 478-487). When a thin film of 10 wt.% PDMS in cyclohexane was applied by spin coating method (2'000 rpm) onto the plasma etched graphene on PES support obtained as described above, above Knudsen selectivity was observed with a $H_2/CH_4$ selectivity of 6.6 and $H_2/CO_2$ selectivity of 7 at 130 °C (Table 2).

**Table 2**

| | Gas permeance (mol/m$^2$-s-Pa) | | | Selectivity | |
|---|---|---|---|---|---|
| | $H_2$ | $CH_4$ | $CO_2$ | $H_2/CH_4$ | $H_2/CO_2$ |
| 25 °C ($\Delta$P = 0) | $5.6 \times 10^{-8}$ | - | - | - | - |
| 25 °C ($\Delta$P = 1 bar) | $2.9 \times 10^{-7}$ | $1.7 \times 10^{-7}$ | - | 1.72 | - |
| After PDMS coating | | | | | |
| 130 °C ($\Delta$P = 1 bar) | $1.9 \times 10^{-8}$ | $3.0 \times 10^{-9}$ | $1.8 \times 10^{-9}$ | 6.6 | 7 |

A thinner (< 1 $\mu$m thick) PDMS layer with 2 wt. % PDMS in cyclohexane was spin coated on top of the high temperature ozone treated graphene on porous PES support (nanopores in graphene were etched by exposing graphene to ozone at 250 °C). Molecular sieving was observed from the prepared membrane with area as large as 0.5 cm$^2$ with $H_2/N_2$ selectivity up to 15 (Table 3).

**Table 3**

| | Gas permeance (mol/m$^2$-s-Pa) | | | | Selectivity | |
|---|---|---|---|---|---|---|
| | $H_2$ | $CH_4$ | $N_2$ | $CO_2$ | $H_2/CH_4$ | $H_2/N_2$ |
| R.T. | $2.1 \times 10^{-8}$ | $5.0 \times 10^{-9}$ | $4.7 \times 10^{-9}$ | | 4.1 | 4.4 |
| 150 °C | $6.3 \times 10^{-8}$ | $5.5 \times 10^{-9}$ | $4.9 \times 10^{-9}$ | - | 11.6 | 13.1 |
| 175°C | $7.9 \times 10^{-8}$ | $6.1 \times 10^{-9}$ | $5.4 \times 10^{-9}$ | $1.4 \times 10^{-8}$ | 12.9 | 14.7 |
| 200°C | $9.4 \times 10^{-8}$ | | $6.3 \times 10^{-9}$ | | | 14.9 |

Resealing of the exposed copper edges of the above membrane described in Table 3 further enhanced the gas separation characteristics and the resulting 21 mm$^2$ membrane exhibited $H_2/N_2$ selectivity up to 29 (Table 4).

**Table 4**

| | Gas permeance (mol/m$^2$-s-Pa) | | | | Selectivity | |
|---|---|---|---|---|---|---|
| | $H_2$ | $CH_4$ | $N_2$ | $CO_2$ | $H_2/CH_4$ | $H_2/N_2$ |
| R.T. | $1.5 \times 10^{-8}$ | $1.8 \times 10^{-9}$ | - | | 8.5 | - |
| 150 °C | $7.1 \times 10^{-8}$ | $3.3 \times 10^{-9}$ | $2.8 \times 10^{-9}$ | - | 22.1 | 25.4 |
| 175°C | $8.5 \times 10^{-8}$ | - | $3.3 \times 10^{-9}$ | | | 26.1 |
| 200°C | $1.0 \times 10^{-7}$ | | $3.6 \times 10^{-9}$ | $1.5 \times 10^{-8}$ | | 28.7 |

Gas permeation measurements are a decisive test for ascertaining the quality of the membrane and can also provide a fair idea of the nature of the defects present in the membrane. The presence of large cracks, tears or defects in the graphene film will inevitably lead to a non-selective pathway for the gas molecules to traverse the membrane. On the other hand, when the pores in graphene are commensurate with kinetic diameters of the gas molecules, activated transport dominates. Knudsen transport occurs when the pores in the graphene are of the same order as that of the mean free path of the gas molecules.

In the above described experiments, the selectivities observed are much higher than the corresponding Knudsen selectivities (e.g. Knudsen selectivity of $H_2/N_2$ is 3.75) and the permeance decreased in the order $H_2 > CO_2 > CH_4 > N_2$. The $H_2$ transport is found to be highly activated with permeance increasing almost 4-fold from room temperature to 200°C. All these factors indicate a clear molecular sieving behavior arising from the polymer supported graphene membrane obtained by a method according to the invention.

These results underline the large-scale applicability and scalability of the use of polymer- supported graphene membrane supported by a polymer layer prepared according to method according to the invention.

## Claims

1. **A method** for the preparation of a polymer-supported graphene membrane comprising the steps of:

   a) providing a graphene membrane on a sacrificial support;
   b) providing a solution of a polymer with a glass transition temperature of about 200°C or higher in an organic solvent ("dope" or "casting" solution), wherein the said solution comprises:

   i) from about 5 to about 45 wt.% of said polymer,
   ii) a dope additive selected from a polymeric agent such as polyvinylpyrrolidone (PVP), a polyethylene glycol (PEG), polyvinyl alcohol (PVA) and polyethylene oxide (PEO) and non-polymeric agent such as glycerol, propionic acid (PA), surfactants such as sorbitan monoleate (Span-80) wherein the amount of the dope additive is higher than 5 to about 65 wt.% and wherein the viscosity of the resulting dope solution at room temperature is from about 0.5 to about 12.75 Pa s, more specifically from about 0.8-3 Pa s at 298 K;

   c) covering the graphene membrane on sacrificial support with the said polymer solution to form a regular polymer solution film on the top of the graphene membrane on a sacrificial;
   d) placing the polymer coated graphene membrane on sacrificial support in a coagulation bath comprising a non-solvent to induce a non-solvent induced phase separation at a temperature from about 0 to 60 °C, wherein said non-solvent comprises from about 55 to about 100 wt.% of an alcohol.

2. The method of claim 1 wherein the dope solution further comprises a further dope additive selected from an alcohol (e.g. isopropyl alcohol (IPA) or ethanol, preferably IPA) or water at about 1 to about 4 wt%.

3. The method of claim 1 wherein the polymer is selected from polyethersulfone (PES) or polysulfone (PSf)

4. The method of any preceding claim wherein the dope solution comprises the polymer at a concentration of about 8 to about 25 wt %.

5. The method of any preceding claim wherein the organic solvent is selected from selected from N-Methyl-2-pyrrolidone (NMP), Dimethylformamide (DMF) and Dimethyl sulfoxide (DMSO), γ-butyrolactone.

6. The method of any preceding claim wherein the organic solvent is NMP.

7. The method of the preceding claim wherein the dope additive is selected from polyvinylpyrrolidone (PVP) and a polyethylene glycol (PEG).

8. The method of any preceding claim wherein the dope additive is at a concentration higher than 5 wt % up to about 15 wt%.

9. The method of any preceding claim wherein the dope solution comprises PES, PVP, IPA in NMP

10. The method of any preceding claim wherein the coagulation bath comprises IPA, preferably 100% PVA.

11. The method of any preceding claim wherein the product obtained under step **d)** is used in an etching step in an etching batch to remove the sacrificial support **step f)** to obtain a free-standing polymer-coated graphene membrane.

12. The method of any preceding claim wherein the coagulation bath is at a temperature between about 20 and 30°C.

13. Gas selective filter for separating $H_2$ and/or He from $CO_2$ or $N_2$ and from larger molecular weight hydrocarbons (e.g. $C_2H_4$) comprising a polymer-supported graphene membrane obtained from a method according to anyone of claims 1 to 12.

14. A gas selective filter comprising a membrane comprising a graphene membrane and a porous polymeric structure, wherein said polymeric support is composed of a polymer with a glass transition temperature of about 200°C or higher and wherein the size of the pores of the polymeric support are sub-500 nm, preferably sub-300 nm at the polymer-graphene interface

15. Use of a gas selective filter according to claim 13 or 14 for separating $H_2$ and/or He and/or $CO_2$ from $N_2$ and $CH_4$ or from larger molecular weight hydrocarbons (e.g. $C_2H_4$).

*adapted from Dong et al., 2018, Membranes, 8(2), 23*

# Figure 1A

# Figure 1B

Figure 1C

Figure 2

Figure 3

Figure 4

Figure 5

Figure 6

Figure 7

Figure 8

Europäisches
Patentamt

European
Patent Office

Office européen
des brevets

# EUROPEAN SEARCH REPORT

Application Number

EP 20 17 4809

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | YANZHE QIN ET AL: "Ultrafast Nanofiltration through Large-Area Single-Layered Graphene Membranes", ACS APPLIED MATERIALS & INTERFACES, vol. 9, no. 11, 13 March 2017 (2017-03-13), pages 9239-9244, XP055737777, US ISSN: 1944-8244, DOI: 10.1021/acsami.7b00504 * page 9239, column 2, line 10 - page 9241, column 1, line 3 * ----- | 1-15 | INV. B01D71/02 B01D67/00 B01D53/22 B01D69/12 B01D71/68 |
| A,D | PIRAN R. KIDAMBI ET AL: "A Scalable Route to Nanoporous Large-Area Atomically Thin Graphene Membranes by Roll-to-Roll Chemical Vapor Deposition and Polymer Support Casting", ACS APPLIED MATERIALS & INTERFACES, vol. 10, no. 12, 19 March 2018 (2018-03-19), pages 10369-10378, XP055737778, US ISSN: 1944-8244, DOI: 10.1021/acsami.8b00846 * page 10377, column 1, lines 3-18 * ----- -/-- | 1-15 | TECHNICAL FIELDS SEARCHED (IPC) B01D |

The present search report has been drawn up for all claims

| Place of search | Date of completion of the search | Examiner |
|---|---|---|
| Munich | 8 October 2020 | Lançon, Eveline |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BARZIN J ET AL: "Correlation between macrovoid formation and the ternary phase diagram for polyethersulfone membranes prepared from two nearly similar solvents", JOURNAL OF MEMBRANE SCIENCE, ELSEVIER BV, NL, vol. 325, no. 1, 15 November 2008 (2008-11-15), pages 92-97, XP025506693, ISSN: 0376-7388, DOI: 10.1016/J.MEMSCI.2008.07.003 [retrieved on 2008-07-10] * abstract * * figure 4 * | 1 | |
| A | US 2018/345230 A1 (KARNS NICOLE K [US] ET AL) 6 December 2018 (2018-12-06) * abstract * | 1,13,14 | |
| A | ISMAIL ET AL: "Effect of additive contents on the performances and structural properties of asymmetric polyethersulfone (PES) nanofiltration membranes", SEPARATION AND PURIFICATION TECHNOLOGY, ELSEVIER SCIENCE, AMSTERDAM, NL, vol. 55, no. 1, 30 March 2007 (2007-03-30), pages 98-109, XP022009881, ISSN: 1383-5866, DOI: 10.1016/J.SEPPUR.2006.11.002 * abstract * | 1,13,14 | TECHNICAL FIELDS SEARCHED (IPC) |

The present search report has been drawn up for all claims

| Place of search | Date of completion of the search | Examiner |
|---|---|---|
| Munich | 8 October 2020 | Lançon, Eveline |

page 2 of 2

## ANNEX TO THE EUROPEAN SEARCH REPORT
## ON EUROPEAN PATENT APPLICATION NO.

EP 20 17 4809

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2020

| Patent document cited in search report | Publication date | Patent family member(s) | Publication date |
|---|---|---|---|
| US 2018345230 A1 | 06-12-2018 | CA 3066080 A1<br>CN 110719809 A<br>US 2018345230 A1<br>WO 2018226466 A1 | 13-12-2018<br>21-01-2020<br>06-12-2018<br>13-12-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JIANG et al.** *Nano Lett.,* 2009, vol. 9 (12), 4019-4024
- **KOENIG et al.** *Nat. Nanotechnol.,* 2012, vol. 7 (11), 728-732
- **CELEBI et al.** *Science,* 2014, vol. 344 (6181), 289-292
- **BAE et al.** *Nat. Nanotechnol.,* 2010, vol. 5 (8), 574-578
- **KOBAYASHI et al.** *Appl. Phys. Lett.,* 2013, vol. 102 (2), 023112
- **WANG et al.** *Nat. Nanotechnol.,* 2017, vol. 12 (6), 509-522
- **HUANG et al.** *Nat. Commun.,* 2018, vol. 9 (1), 2632
- **LEE, CET.** *ACS Nano,* 2014, vol. 8 (3), 2336-2344
- **BAKER, R. W.** Membrane Technology and Applications. Wiley, 2004
- **WANG et al.** *Curr. Opin. Chem. Eng.,* 2013, vol. 2, 229-237
- **GUILLEN et al.** *Ind. Eng. Chem. Res,* 2011, vol. 50, 3798-3817
- **TAN et al.** *Polymers,* 2019, vol. 11, 1160
- **ISMAIL et al.** Gas Separation Membranes: Polymeric and Inorganic. Springer International Publishing, 2015
- **QIN et al.** *ACS Appl. Mater. Interfaces,* 2017, vol. 9 (11), 9239-9244
- **KIDAMBI et al.** *ACS Appl. Mater. Interfaces,* 2018, vol. 10 (12), 10369-10378
- **KARNIK et al.** *Adv. Mater.,* 2018, vol. 30 (49), 1804977

- **BARZIN et al.** *J. Membr. Sci.,* 2018, vol. 325 (1), 92-97
- **DONG et al.** *Membranes,* 2018, vol. 8 (2), 23
- **SWIHART et al.** *Energy Environ. Sci.,* 2017, vol. 00, 1-3
- **PESIRI et al.** *J. Memb. Sci.,* 2003, vol. 218, 11-18
- **CHOI et al.** *J. Am. Chem. Soc.,* 2010, vol. 132, 448-449
- **RAMASUBRAMANIAN et al.** *AIChE J.,* 2013, vol. 59, 1033-1045
- **WANG et al.** *J. Memb. Sci.,* 2014, vol. 450, 425-432
- **KANEZASHI et al.** Advances in Bioceramics and Porous Ceramics II. John Wiley & Sons, Ltd, 2010, 229-239
- **BRINKER et al.** *MRS Proc.,* 1994, vol. 368, 329
- **GASCON et al.** *Chem. Mater.,* 2012, vol. 24, 2829-2844
- **ZHAO et al.** *Science Advances,* 2019, vol. 5 (1), eaav1851
- **HUANG et al.** *Nature Communications,* 2018, vol. 9 (1), 2632
- **HE et al.** *Energy Environ. Sci.,* 2019, vol. 12 (11), 3305-3312
- **LI et al.** *Chem. Commun.,* 2014, vol. 50 (24), 3214-3216
- **CHIU et al.** *J. Membr. Sci.,* 2011, vol. 377 (1), 182-190
- **BASU et al.** *Membr. Sci.,* 2010, vol. 362 (1), 478-487